# EUROPÄISCHE PATENTANMELDUNG

(11) **EP 0 989 150 A1**
(43) Veröffentlichungstag der Anmeldung: **29.03.2000**
(21) Anmeldenummer: 99810812.0
(22) Anmeldetag: 10.09.1999
(51) Int. Cl.: C08G 69/16, C08G 69/46

(54) **Verfahren und Vorrichtung zur Vakuum-Entmonomerisierung von Polyamid 6-Schmelzen**

(30) Priorität: 25.09.1998 DE 19844176
(71) Anmelder: Ems-Chemie (Deutschland) GmbH, 64823 Gross-Umstadt (DE)
(72) Erfinder: Beck, Herbert, 64850 Schaafheim (DE); Luck, Hans Rudolf, 7013 Domat/Ems (CH)
(74) Vertreter: Hug Interlizenz AG

(57) **Zusammenfassung**

Die Erfindung betrifft ein Verfahren und eine Vorrichtung zur Entfernung niedermolekularer Anteile aus Polyamid 6-Schmelzen und Copolyamid-Schmelzen auf der Basis von Polyamid 6 mittels Vakuum in einem von der Schmelze kontinuierlich durchströmten Stoffaustauschapparat, der über eine Vakuum-Saugleitung an eine Vorrichtung zur Vakuumerzeugung und Kondensation der verdampften, abgesaugten niedermolekularen Verbindungen angeschlossen ist, wobei in der vakuumseitigen Vorrichtung die Vakuumerzeugung und die Kondensation der niedermolekularen Verbindungen in einer Flüssigkeits-Strahlpumpe zusammengefasst sind, die mit flüssigem Caprolactam betrieben wird.

## Beschreibung

Die Erfindung betrifft ein Verfahren und eine Vorrichtung zur Entfernung niedermolekularer Anteile aus Polyamid 6-Schmelzen mittels Vakuum, vereinfacht oft als Vakuum-Entmonomerisierung bezeichnet.

Die Erfindung betrifft insbesondere ein neues Verfahren und eine entsprechende Vorrichtung zur Erzeugung des Vakuums und Kondensation der abgesaugten niedermolekularen Verbindungen, die unter entsprechenden Bedingungen in einem Stoffaustauschapparat aus einer unbehandelten Polyamid 6-Schmelze ausdampfen.

Es ist bekannt, dass bei der hydrolytischen Polymerisation von Caprolactam zu Polyamid 6 nur ca. 90 % des eingesetzten Caprolactams zum Polymer umgesetzt werden. Aufgrund einer Gleichgewichtseinstellung verbleiben am Ende der Polymerisation ca. 10 % niedermolekulare Anteile im Polymer, die sich im wesentlichen aus monomerem Caprolactam sowie einem kleineren Anteil Oligomeren mit hohen Schmelzpunkten (vor allem cyclischem Dimer und Trimer des Caprolactams) zusammensetzen. Diese niedermolekularen Anteile im Polymerisationsprodukt müssen vor der Verarbeitung entfernt werden, weil sie sonst im Betriebsablauf zu erheblichen Störungen führen und die Qualität der Endprodukte beeinträchtigen.

Diese Grundlagen und Verfahren zur Entfernung niedermolekularer Anteile aus Polyamid 6 sind unter anderem beschrieben in der CZ-Chemie-Technik, 2. Jahrgang (1973) Nr. 3, S. 95-99. In der Einleitung dieser Fachpublikation werden die beiden grundsätzlich angewandten Techniken erwähnt: Extraktion von rohem PA 6-Granulat mit heissem Wasser oder Abtrennung von Monomer und Oligomeren durch Verdampfen aus der Schmelze unter Vakuum. Das zweite Verfahren, die sogenannte Vakuum-Entmonomerisierung, wird eingehender beschrieben. Auf der Seite 99 findet man den Hinweis, dass zur Erzeugung des Vakuums häufig Dampfstrahlpumpen eingesetzt werden, an welche sich ein Kondensator anschliesst.

Gleich wie bei der vorwiegend angewandten wässrigen Extraktion fällt bei der Vakuum-Entmonomerisierung mit Dampfstrahlpumpen eine 5- bis 10-prozentige Lösung von Monomer und Oligomeren in Wasser an, wie dem oben zitierten Beitrag in der CZ-Chemie-Technik auf der Seite 99 entnommen werden kann. Diese verdünnte Lösung muss mit grossem Energieaufwand eingedampft werden, damit die niedermolekularen Anteile nach Aufbereitung in einer Rückgewinnungsanlage als monomerer Rohstoff in die Polymerisation zurückgeführt werden können. Ein zusätzlicher Nachteil im Vergleich zur Heisswasser-Extraktion ergibt sich in Bezug auf das Produkt noch dadurch, dass der Rest-Extraktgehalt nach einer Vakuum-Entmonomerisierung höher liegt, und zwar beim Gesamt-Extraktwert und noch deutlicher beim Oligomerenanteil, wie aufgeführt in Tabelle 6 auf Seite 99 der oben zitierten Zeitschrift CZ-Chemie-Technik.

Der geschilderte Stand der Technik entspricht dem in der DE-OS 1 545 221 beschriebenen Verfahren, bei welchem ein Dampfstrahlsauger verwendet wird, der zur Verhinderung von Oligomerablagerungen durch Desublimation beheizt ist. Zur VakuumApparatur gehören überdies ein nachgeschalteter Kondensator und eine Wasserringpumpe. Dazu kommt die Eindampfung zur Aufkonzentrierung der wässrigen Lösung.

Ein modifiziertes Vakuum-Entmonomerisierungsverfahren ist beschrieben im COMPENDEX-Abstract über den Artikel "Condensation of caprolactam vapor in the synthesis of polycaproamide under vacuum" aus der Zeitschrift Fibre Chemistry (English Translation of Khimicheskie Volokna), Vol. 15 no. 5, Sep-Oct 1983, pp 341-344. Verwendet wird wiederum eine Dampfstrahlpumpe zur Vakuumerzeugung, aber mit einem vorgeschalteten Kondensator, der bei einer Temperatur von weniger als 60 °C betrieben wird, d.h. unterhalb des Schmelzpunktes von Caprolactam, der ca. 69 °C beträgt. Auf diese Weise werden die niedermolekularen Verbindungen zum grössten Teil in fester Form kondensiert, und es gelangt nur noch eine kleine Menge Caprolactam in das Wasser der Dampfstrahlpumpe. Obwohl mit dieser Verbesserung auf eine Rückgewinnung durch Eindampfen verzichtet werden kann, handelt man sich dafür das Problem ein, die Wärmeaustauschfläche des Kondensators, der überdies ja unter Vakuum steht, ständig vom kondensierten Material befreien bzw. reinigen zu müssen. Dieses Problem und eine technische Lösung dazu sind beschrieben in DD 65028. Eine andere, verfahrenstechnische Lösung zur Vermeidung der Abreinigung eines Oberflächenkondensators ist beschrieben in DE 25 03 308 C2. Diese Lösung ist aber an die Bedingung gebunden, dass die Polycaprolactamschmelze einen unüblich hohen Anteil von 12 bis 30 % monomerem Caprolactam enthält, d.h. dass die Polymerisation schon deutlich vor dem Gleichgewichtsumsatz beendet wird und die Polymerausbeute damit kleiner ist. Wenn dann die Kondensationstemperatur auf über 80 °C eingestellt wird, ist die Menge des in flüssiger Form kondensierenden Caprolactams im Verhältnis zum desublimierenden, in fester Form anfallenden cyclischen Dimer so gross, dass die Konzentration des cyclischen Dimers im flüssigen Lactam unterhalb der Löslichkeitsgrenze (z.B. 0,6 % bei 80 °C) liegt und somit das cyclische Dimer im Caprolactam gelöst bleibt und mit diesem vom Kondensator abtropft, ohne auf der Oberfläche Ablagerungen zu bilden.

Es ist auch bekannt, statt einer Dampfstrahlpumpe mit Kondensator eine Wasserstrahlpumpe einzusetzen. Ein solches Verfahren ist beschrieben im DERWENT-Abstract von JP 74026956 B. Dabei hat man wiederum den Nachteil, dass eine wässrige Lösung anfällt, die zur Rückgewinnung des Caprolactams eingedampft werden muss.

Eine weiterentwickelte Variante eines Systems bestehend aus Kondensator und Vakuumpumpe ist beschrieben in der DE-OS 29 48 865 (welche dem US-Patent 4,376,680 entspricht). Die aus einem Dünnschichtverdampfer kommenden niedermolekularen Verbindungen werden durch Kontakt mit einem Strom von geschmolzenem Caprolactam kondensiert, der in einer entsprechenden Vorrichtung im Kreislauf geführt wird. Damit der Wärme- und Stoffaustausch genügend intensiv ist, wird ein turmförmiger Kondensator verwendet, in dessen Kopf das flüssige Caprolactam versprüht wird, und der mit Einbauten oder Füllkörpern zur zusätzlichen Erhöhung der Kontaktoberfläche ausgestattet ist. Damit die Höhe des Sumpfes im unter Vakuum stehenden Kondensator konstant bleibt, muss durch ein Abzugsventil auf der Druckseite der Zirkulationspumpe dem Kreislauf auf geregelte Weise kontinuierlich eine solche Menge Caprolactam entnommen werden, die der gleichzeitig kondensierenden Dampfmenge entspricht. Für den Fall des Auftretens von Verunreinigungen ist angegeben, dass eine zusätzliche Menge Caprolactam aus dem Kreislauf abgezogen und gegen frisches, gereinigtes Caprolactam ausgetauscht werden kann. Dem Kondensator nachgeschaltet ist ein als Dampffalle wirkendes Gefäss, an das sich schliesslich eine Vakuumquelle anschliesst. Die Art der Vakuumquelle wird offen gelassen. Üblicherweise werden dafür Saugstrahlpumpen oder mechanische Pumpen (z.B. Wälzkolbenpumpen) eingesetzt, oft auch in Kombination mit Wasserringpumpen. Insgesamt ist also die in der DE-OS 29 48 865 beschriebene Vorrichtung gross und komplex und umfasst viele Komponenten, von denen die meisten unter Vakuum stehen. Dadurch steigt unter anderem das Risiko von eventuellen Leckagen, ganz abgesehen von den hohen Investitions- und Betriebskosten.

Aufgabe der Erfindung war es deshalb, ein Verfahren mit entsprechender Vorrichtung zu entwickeln, mit welchem die Vakuum-Entmonomerisierung von Polyamid 6-Schmelzen auf einfache, kompakte, zuverlässige und effiziente Weise wirtschaftlich und ohne die geschilderten Nachteile des Standes der Technik durchgeführt werden kann.

Diese Aufgabe wird durch das Verfahren nach Anspruch 1 bzw. durch die Vorrichtung nach Anspruch 10 gelöst. In den Unteransprüchen sind vorteilhafte Ausführungsformen der Erfindung enthalten.

Erfindungsgemäss werden die beiden Grundoperationen "Vakuum erzeugen" und "Kondensieren der niedermolekularen Verbindungen" in einem einzigen, einfachen Apparat zusammengefasst, der mit flüssigem Caprolactam betrieben wird. Kernstück dabei ist eine mit Caprolactam betriebene Flüssigkeits-Strahlpumpe, die das Vakuum erzeugt und in der zugleich die Kondensation der angesaugten Dämpfe im Treibmittel erfolgt.

Verglichen mit dem bisherigen grossen Aufwand gemäss Stand der Technik konnten mit der vorliegenden Erfindung auf überraschend einfache Weise gerade mehrere Probleme auf einen Schlag gelöst werden. Unerwartet dabei ist neben der Integration der beiden Verfahrensstufen auch die erstaunliche Tatsache, dass eine Saugstrahlpumpe ohne Schwierigkeiten mit einem Medium betrieben wird, das bei Raumtemperatur ein Feststoff ist. Es gibt keine Vermischung des Kondensats mit einem Fremdstoff, da das Treibmittel identisch mit dem Monomer ist, und ein grosser Vorteil verglichen mit dem Stand der Technik besteht darin, dass die Abscheidung der Dämpfe nicht im Vakuum-, sondern im Normaldruckbereich erfolgt, was viel effektiver ist und das Vakuum-Volumen der Vorrichtung (und dadurch die Leckage-Gefahr) um Faktoren verkleinert. Überdies ist nur ein Minimum an bewegten Teilen erforderlich, nämlich eine Umwälzpumpe mit dem nötigen Treibdruck für die Strahlpumpe.

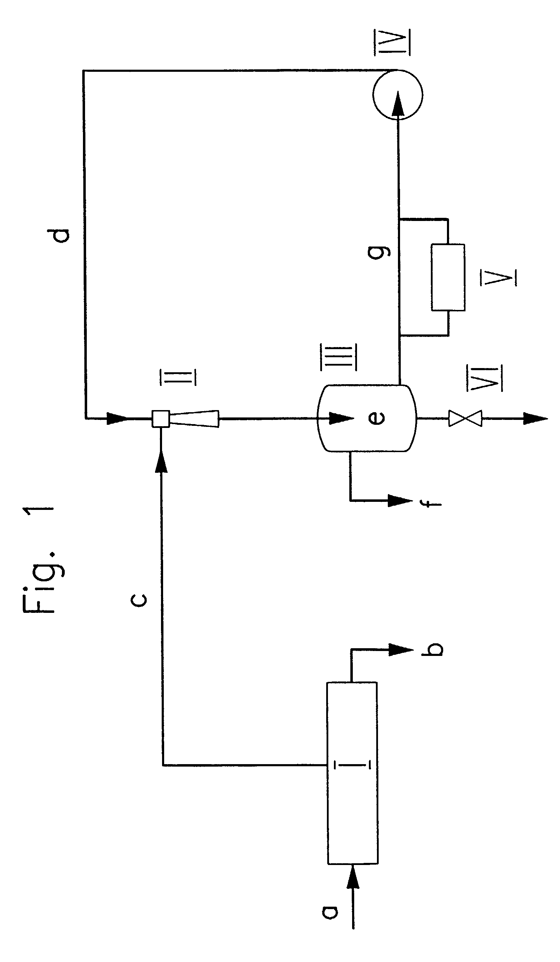

Nachfolgend wird das Prinzip der Erfindung anhand der Darstellung von **Fig. 1** näher erläutert. Die Figur stellt die Erfindung schematisch und beispielhaft dar und hat keinen einschränkenden Charakter auf die Grundidee, zu der bei der konkreten Realisierung verschiedene Ausführungsformen und Details möglich sind.

Die Bezugszeichen bedeuten:
- **I**: Stoffaustauschapparat
- **II**: Flüssigkeits-Strahlpumpe
- **III**: Abtauchbehälter
- **IV**: Umwälzpumpe
- **V**: Filter (optional)
- **VI**: Bodenablassventil (optional)
- **a**: rohe (unbehandelte) Polyamid 6-Schmelze
- **b**: behandelte Polyamid 6-Schmelze (nach Vakuum-Entmonomerisierung)
- **c**: Monomer- und Oligomeren-Dämpfe (Vakuum-Saugleitung)
- **d**: flüssiges Caprolactam als Treibmittel
- **e**: flüssiges Caprolactam mit kondensierten niedermolekularen Verbindungen
- **f**: Überlauf aus dem Abtauchbehälter
- **g**: Rückführung von flüssigem Caprolactam zur Umwälzpumpe

Die Vakuum-Entmonomerisierung der zugeführten rohen Polyamid 6-Schmelze **a** erfolgt kontinuierlich in einem auf das entsprechende Temperaturniveau (im Bereich von 225-300 °C) beheizten Stoffaustauschapparat **I**. Geeignet sind hierzu Apparate nach dem Prinzip eines Fallfilm- oder Dünnschichtverdampfers sowie Entgasungsextruder, unter denen neben Zweischneckenextrudern die Mehrschneckenextruder besonders bevorzugt sind. In solchen Apparaten ist die Stoffaustauschfläche zwischen der Schmelze und dem über die Leitung **c** angelegten Vakuum sehr gross und/oder wird ständig erneuert. Die aus der Schmelze austretenden Monomer- und Oligomeren-Dämpfe werden kontinuierlich über eine möglichst kurze und vollständig beheizte Vakuum-Saugleitung c abgezogen und gelangen bei gleichbleibend hoher Temperatur (die nicht tiefer als die Temperatur der Polyamid 6-Schmelze ist und im Bereich von 250-300 °C liegt) zu der Flüssigkeits-Strahlpumpe **II**, welche das Vakuum erzeugt. Erfindungsgemäss wird diese Strahlpumpe mit flüssigem Caprolactam **d** betrieben. Zweckmässigerweise wird das Treibmittel in einem beheizten Kreislauf geführt und kommt in der notwendigen Menge und mit dem erforderlichen Druck von der Umwälzpumpe **IV**. Das Temperaturniveau des flüssigen Caprolactam-Kreislaufs ist natürlich bedeutend niedriger als das des schmelze- und dämpfeführenden Teils der Vorrichtung, liegt aber über dem Schmelzpunkt von Caprolactam. Bevorzugt wird eine Temperatur im Bereich von 75-100 °C eingestellt. Trotz dieser im Vergleich zu einer herkömmlichen Wasserstrahlpumpe deutlich höheren Temperatur wird mit der erfindungsgemäss betriebenen Flüssigkeits-Strahlpumpe **II** ein niedrigerer Saugdruck, d.h. ein besseres Vakuum erreicht, weil der niedrigste erreichbare Saugdruck (Blindvakuum bei Förderleistung Null) dem Dampfdruck der Treibflüssigkeit entspricht. So hat zum Beispiel Wasser bei 20 °C einen Dampfdruck von 2,3 kPa, Caprolactam bei 100 °C aber lediglich einen Dampfdruck von 0,27 kPa. Dies ist die Erklärung für den zusätzlichen Vorteil der vorliegenden Erfindung, dass damit in der Vakuum-Saugleitung **c** und im Stoffaustauschapparat **I** im Vergleich zum Stand der Technik ungewöhnlich niedrige Drücke im Bereich von 0,5 bis 1,0 kPa erreicht werden, was für eine effiziente Vakuum-Entmonomerisierung sehr vorteilhaft ist. In der Strahlpumpe **II** werden nun die angesaugten Dämpfe intensivst mit dem als Treibmittel arbeitenden flüssigen Caprolactam durchmischt und kondensieren deshalb sofort durch die rasche Abkühlung in der Flüssigkeit und die Verdichtung in der Strahlpumpe. Die Kondensation in der Strahlpumpe verleiht dieser sogar noch zusätzliche Volumenstrom-Saugleistung. Das flüssige Gemisch **e** (Caprolactam mit kondensierten niedermolekularen Verbindungen) verlässt darauf die Strahlpumpe und gelangt durch ein Fallrohr in den Abtauchbehälter **III**, wo der Austritt des Fallrohrs unter dem Flüssigkeitsniveau mündet. Zur Abführung der im Betrieb durch die Kondensation der niedermolekularen Verbindungen freigewordenen Wärme kann der Abtauchbehälter **III** zusätzlich zur Beheizung mit einer (geregelten) Kühlung ausgestattet sein. Der Abtauchbehälter weist zudem einen Überlauf **f** auf, durch welchen ein gleichbleibendes Flüssigkeitsniveau gegeben ist und über den im stationären Betrieb eine der abgesaugten Menge Monomer- und Oligomeren-Dämpfe **c** entsprechende Flüssigkeitsmenge, bestehend aus Caprolactam und einem gewissen darin gelösten Anteil Oligomeren, abfliesst. Der Überlaufstrom **f** kann direkt einer Monomer-Reinigungsanlage zugeführt und nachher wieder für die Polymerisation eingesetzt werden. Über eine Rückführung **g** wird flüssiges Caprolactam (mit darin gelösten Oligomeren) vom Abtauchbehälter **III** zur Umwälzpumpe **IV** geleitet, womit der Kreislauf geschlossen ist. Zur Vorbeugung gegen Verschmutzung des Kreislaufs durch eventuelle Oligomerenablagerungen kann die Rückführung **g** über ein optionales Filter **V** geleitet werden, das aber für den Betrieb ebenso wie das optionale Bodenablassventil **VI** nicht unbedingt erforderlich ist. In Fällen von etwaigen Verunreinigungen im Kreislauf kann auch frisches, reines Caprolactam (in aufgeschmolzener Form) in den Kreislauf eingespeist werden, was den Überlauf **f** verstärkt und dadurch die Oligomerenkonzentration im Kreislauf reduziert. Am zweckmässigsten ist es, gegebenenfalls zuerst über das Bodenablassventil **VI** eventuell entstandenen Oligomerensumpf abzulassen und dann den Abtauchbehälter **III** mit Frischlactam wieder bis zum Überlauf aufzufüllen.

Nach der Vakuum-Entmonomerisierung kann die aus dem Stoffaustauschapparat **I** austretende, extraktarme und gebrauchsfertige Polyamid 6-Schmelze **b** direkt der Weiterverarbeitung zugeführt oder zunächst granuliert und später weiterverarbeitet werden. Vorteilhafte direkte Weiterverarbeitungsvarianten sind die Compoundierung mit Zuschlagstoffen zur Herstellung von thermoplastischen Formmassen für technische Anwendungen und das Direktspinnen von Fäden zur Herstellung von Fasern und Filamenten.

Für die Compoundierung, d.h. die Herstellung technischer Formmassen, werden neben reinem Polyamid 6 zum Teil auch Copolyamide auf der Basis von Polyamid 6 verwendet, die also neben Caprolactam auch noch andere polyamidbildende Grundbausteine wie beispielsweise Laurinlactam oder Adipinsäure bzw. Sebazinsäure mit der entsprechenden molaren Menge Hexamethylendiamin enthalten. Weitere übliche Comonomere sind in der EP 0 204 123 B1 der gleichen Anmelderin (abgesehen von der Namensänderung) auf der Seite 5, Zeilen 11-25, angegeben, deren Offenbarung hier ausdrücklich inbegriffen ist. Es ist klar, dass auch aus solchen auf Polyamid 6 basierenden Copolyamiden monomeres Caprolactam und dessen Oligomeren entfernt werden müssen und dass dafür das neue, erfindungsgemässe Verfahren und die entsprechende Vorrichtung selbstverständlich genauso gut geeignet sind wie für reines Polyamid 6.

Mit der vorliegenden Erfindung ist eine signifikante Verbesserung sowohl in der Qualität der behandelten Polyamid-Schmelze als auch in der Wirtschaftlichkeit und Betriebssicherheit der Vakuum-Entmonomerisierung gelungen. Damit kommt die neue Erfindung auch für Produkte in Frage, bei denen bisher praktisch nur die Heisswasser-Extraktion von Granulat angewandt wurde, wie z.B. für Fasern, Filamente und Folien.

### Beispiel 1

Zunächst wurde Caprolactam auf bekannte Weise (gemäss EP 0 204 123 B1) in einem Autoklaven polymerisiert. Die so hergestellte Polyamid 6-Schmelze enthielt noch 9 % extrahierbare Anteile, davon 7,5 % monomeres Caprolactam; der Rest bestand aus Oligomeren. Die quantitative Bestimmung der Extrakt-Werte wurde mit Methanol nach DIN 53 738 durchgeführt. Die relative Lösungsviskosität der mittels Methanol-Extraktion von Monomer und Oligomeren befreiten Laborprobe betrug 2,86 , gemessen als 1-prozentige Lösung in konzentrierter (96 %iger) Schwefelsäure. Nach dem Entspannen des Autoklaven wurde die Polyamid 6-Schmelze mittels einer Zahnradpumpe in einem Mengenstrom von 82 kg/h dem Stoffaustauschapparat zugeführt. Beim Stoffaustauschapparat handelte es sich um einen Mehrschneckenextruder (MSE) der Firma Hermann Berstorff Maschinenbau GmbH (Hannover, Deutschland), wie prinzipiell beschrieben in US 5,108,711 und EP 0 588 008 Al. Der genaue Typ des Mehrschneckenextruders war ein MSE 40 mit 40 mm Schneckendurchmesser und einem L/D-Verhältnis von 12. Es wurde eine Schneckendrehzahl von 165 min⁻¹ eingestellt, was zusammen mit dem Durchsatz von 82 kg/h eine mittlere Verweilzeit der Schmelze im Mehrschneckenextruder von ca. 5 Minuten ergab. Der Mehrschneckenextruder wurde über eine heisse Saugleitung mit Hilfe einer Flüssigkeits-Strahlpumpe evakuiert (wie in Fig. 1 schematisch dargestellt). Erfindungsgemäss wurde die Strahlpumpe mit flüssigem Caprolactam betrieben, das im Kreislauf geführt wurde und dessen Temperatur im Bereich von 80-90 °C lag. Damit wurde im Mehrschneckenextruder ein Vakuum im Bereich von 0,5-1,0 kPa erreicht. Zusätzlich begünstigt durch die vom MSE-Prinzip erzeugten dünnen Schmelzeschichten und die ständige Durchmischung und Oberflächenerneuerung verdampften unter dem angelegten Vakuum Monomer und Oligomere sehr schnell aus der ca. 280 °C heissen Schmelze. Die Dämpfe wurden von der Strahlpumpe abgesaugt und in dem als Treibmittel dienenden flüssigen Caprolactam kondensiert. Die Strahlpumpe stammte von der Firma GEA Wiegand GmbH (Ettlingen, Deutschland) und hatte die Grösse 8 in der Standard-Baureihe der GEA-Flüssigkeitsstrahl-Vakuumpumpen. (Bei dieser Grösse haben der Betriebsflüssigkeitsanschluss und der Druckanschluss je 80 mm und der Sauganschluss 65 mm Durchmesser.) Der beheizte Caprolactam-Kreislauf bestand im übrigen neben den Verbindungsleitungen aus einem Abtauchbehälter mit Überlauf und einer Umwälzpumpe (gemäss Fig. 1). Bei der Umwälzpumpe handelte es sich um eine Kreiselpumpe mit geschlossenem Laufrad, Magnetkupplung und frequenzgeregeltem Antriebsmotor. Die Umwälzpumpe war zwecks Beschickung der Strahldüse mit der notwendigen Menge flüssigen Caprolactams und dem erforderlichen Druck auf einen Volumentreibstrom von 20 m³/h und einen Treibdruck von 0,7 MPa (abs.) ausgelegt und wurde mit dieser Leistung betrieben. Die Wirksamkeit der Vakuum-Entmonomerisierung nach dem neuen Verfahren und mit der entsprechenden Vorrichtung zeigte sich daran, dass die aus dem Mehrschneckenextruder austretende Schmelze nur noch 0,6 % extrahierbare Anteile enthielt, bei einem Gehalt an monomerem Caprolactam von weniger als 0,1 %. Verglichen mit der Tabelle 6 aus der bei der Würdigung des Standes der Technik zitierten Zeitschrift CZ-Chemie-Technik ist dieses Resultat um den Faktor 3 bis 4 besser als mit den bisherigen Vakuum-Entmonomerisierungsverfahren und kommt nahe an die Ergebnisse einer Heisswasser-Extraktion heran. Übrigens betrug die relative Lösungsviskosität der Polyamid 6-Schmelze nach dem Passieren des Mehrschneckenextruders 2,60.

## Patentansprüche

1. Verfahren zur Entfernung niedermolekularer Anteile aus Polyamid 6-Schmelzen und Copolyamid-Schmelzen auf der Basis von Polyamid 6 mittels Vakuum in einem von der Schmelze kontinuierlich durchströmten Stoffaustauschapparat, der über eine Vakuum-Saugleitung an eine Vorrichtung zur Vakuumerzeugung und Kondensation der verdampften, abgesaugten niedermolekularen Verbindungen angeschlossen ist, dadurch gekennzeichnet, dass in der vakuumseitigen Vorrichtung die Vakuumerzeugung und die Kondensation der niedermolekularen Verbindungen in einer Flüssigkeits-Strahlpumpe zusammengefasst sind, die mit flüssigem Caprolactam betrieben wird.

2. Verfahren gemäss Anspruch 1, dadurch gekennzeichnet, dass der Stoffaustauschapparat ausgewählt ist aus der Gruppe Fallfilmverdampfer, Dünnschichtverdampfer und Entgasungsextruder und auf 225 bis 300 °C beheizt wird.

3. Verfahren gemäss Anspruch 2, dadurch gekennzeichnet, dass der Entgasungsextruder ein Mehrschneckenextruder ist.

4. Verfahren gemäss einem der vorhergehenden Ansprüche, dadurch gekennzeichnet, dass die Vakuum-Saugleitung auf eine Temperatur im Bereich von der Schmelzetemperatur im Stoffaustauschapparat bis 300 °C beheizt wird und an der Flüssigkeits-Strahlpumpe angeschlossen ist.

5. Verfahren gemäss einem der vorhergehenden Ansprüche, dadurch gekennzeichnet, dass die Strahlpumpe mit flüssigem Caprolactam bei einer Temperatur von 75 bis 100 °C betrieben und mit diesem Treibmittel ein Vakuum von kleiner oder gleich 1,0 kPa (abs.) erzeugt wird.

6. Verfahren gemäss einem der vorhergehenden Ansprüche, dadurch gekennzeichnet, dass das flüssige Caprolactam, mit im Betrieb darin gelösten Oligomeren, im Kreis geführt wird und der Kreislauf nach der Strahlpumpe durch einen Abtauchbehälter mit Überlauf und eine Umwälzpumpe führt, die ihrerseits das Caprolactam als Treibmittel zurück zur Strahlpumpe fördert.

7. Verfahren gemäss einem der vorhergehenden Ansprüche, dadurch gekennzeichnet, dass die aus dem Stoffaustauschapparat austretende, behandelte Schmelze direkt der Weiterverarbeitung zugeführt oder zunächst granuliert und später weiterverarbeitet wird.

8. Verfahren gemäss Anspruch 7, dadurch gekennzeichnet, dass die direkte Weiterverarbeitung in der Compoundierung mit Zuschlagstoffen zur Herstellung von thermoplastischen Formmassen für technische Anwendungen besteht.

9. Verfahren gemäss Anspruch 7, dadurch gekennzeichnet, dass die direkte Weiterverarbeitung im Direktspinnen von Fäden zur Herstellung von Fasern und Filamenten besteht.

10. Vorrichtung zur Vakuumerzeugung und Kondensation von niedermolekularen Verbindungen bei der Durchführung des Verfahrens nach einem der vorhergehenden Ansprüche, dadurch gekennzeichnet, dass diese eine Flüssigkeits-Strahlpumpe, einen Abtauchbehälter mit Überlauf und eine Umwälzpumpe umfasst, als Kreislauf konzipiert und für den Betrieb mit flüssigem Caprolactam ausgelegt ist.
